## Europäisches Patentamt
## European Patent Office
## Office européen des brevets

(11) Numéro de publication: **0 260 168**
**B1**

(12)
# FASCICULE DE BREVET EUROPEEN

(45) Date de publication du fascicule du brevet:
**10.01.90**

(51) Int. Cl.⁴: **B60T 13/02**, B60T 7/04

(21) Numéro de dépôt: **87401835.1**

(22) Date de dépôt: **07.08.87**

(54) Amplificateur mécanique d'effort, notamment pour système de freinage d'un véhicule.

(30) Priorité: **10.09.86 FR 8612666**

(43) Date de publication de la demande:
**16.03.88 Bulletin 88/11**

(45) Mention de la délivrance du brevet:
**10.01.90 Bulletin 90/2**

(84) Etats contractants désignés:
**DE ES GB IT**

(56) Documents cités:
**EP-A- 0 029 213**
**EP-A- 0 050 540**
**FR-A- 1 166 904**
**GB-A- 819 501**

(73) Titulaire: **BENDIX France Société Anonyme dite:,
126, rue de Stalingrad, F-93700 Drancy(FR)**

(72) Inventeur: **Kervagoret, Gilbert, 5, Impasse Nobleterre,
F-95100 Argenteuil(FR)**

(74) Mandataire: **Lejet, Christian et al, BENDIX FRANCE
Division Technique Service Brevets Bendix
Europe 126 rue de Stalingrad, F-93700 Drancy(FR)**

EP 0 260 168 B1

## Description

La présente invention se rapporte aux amplificateurs mécaniques d'effort et, plus particulièrement à un tel amplificateur pour système de freinage de véhicule selon le préambule de la revendication 1.

Les constructeurs d'automobiles souhaitent que, pour un système de freinage comprenant un dispositif d'assistance, le déplacement de la pédale de freinage permette une course réduite et précise du piston d'actionnement du dispositif d'assistance. De plus, lors d'une défaillance du dispositif d'assistance, l'effort demandé à la pédale, pour freiner le véhicule quand le dispositif est en mode hydrostatique, est souvent excessif.

Le document DE-B 1 179 811, qui corresponde au préambule de la revendication 1, décrit un amplificateur mécanique pour un système de freinage d'un véhicule qui comprend un nombre élevé de leviers et de biellettes de liaison, ce qui rend sa construction complexe et coûteuse.

Le document EP-A 0 050 540 décrit un système à leviers à axes mobiles permettant de faire varier la course de la pédale de freinage par rapport à celle du piston du maître-cylindre.

Le document EP-A 0 029 213 décrit un système à renvois d'équerre et tringlerie permettant de transmettre le mouvement de la pédale de frein au piston d'un maître-cylindre éloigné.

La présente invention a pour but un amplificateur d'effort qui soit simple et peu coûteux du type comprenant un élément d'entrée, et un élément de sortie, l'élément d'entrée étant relié à pivotement à un premier levier, et l'élément de sortie étant relié à pivotement à un deuxième levier, les premier et deuxième leviers étant montés indépendamment à pivotement sur un support fixe et reliés par un moyen de liaison.

Selon l'invention, le moyen de liaison comprend une biellette unique montée à pivotement sur les premier et deuxième leviers, l'axe d'articulation de la biellette unique sur le premier levier se trouvant entre l'axe d'articulation de l'élément d'entrée sur le premier levier et le point de pivotement du premier levier par rapport au support fixe, tandis que l'axe d'articulation du deuxième levier sur l'élément de sortie se trouve entre l'axe d'articulation de la biellette unique sur le deuxième levier et le point de pivotement du deuxième levier par rapport au support fixe.

D'autres caractéristiques et avantages de la présente invention ressortiront de la description suivante d'un mode de réalisation donné à titre illustratif mais nullement limitatif, faite en relation avec les dessins annexés sur lesquels :

- la Figure 1 est une vue schématique d'un amplificateur mécanique d'effort, selon l'invention, dans sa position de repos, et ;
- la Figure 2 est une vue schématique de l'amplificateur de la figure 1, dans une position avancée.

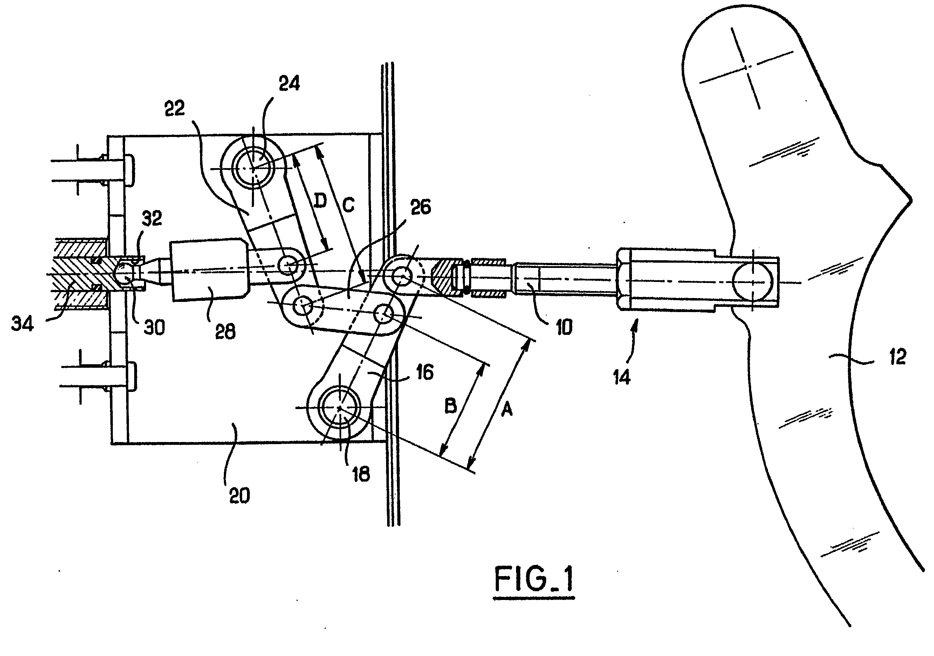

Comme représenté sur la figure 1 l'amplificateur mécanique d'effort comprend une tige d'entrée 10 qui, dans l'exemple illustré, est montée à pivotement à une extrémité sur une pédale de freinage 12 d'un véhicule (non représenté). La tige d'entrée 10 comprend un moyen de réglage 14 destiné à permettre le réglage de la longueur de la tige 10 lors du montage de l'amplificateur sur le véhicule. L'autre extrémité de la tige d'entrée 10 est montée à pivotement sur une extrémité d'un premier levier 16 qui est monté à pivotement à son autre extrémité sur un axe 18 monté fixe dans une ferrure 20. Un deuxième levier 22 est monté à pivotement à une extrémité sur un deuxième axe 24 monté fixe dans la ferrure 20. Le deuxième levier 22 est relié à pivotement à son autre extrémité à une biellette de liaison 26 qui est également montée à pivotement sur le premier levier 16. La distance entre les centres des points de pivotement aux extrémités du premier levier 16 est indiquée par la lettre A, tandis que la distance entre le centre de l'axe 18 et le centre du point de pivotement de la biellette de liaison 26 sur le premier levier 16 est B.

La distance entre le centre de l'axe 24 et le centre du point de pivotement de la biellette 26 sur le deuxième levier 22 est C.

L'amplificateur d'effort comprend, de plus, une tige de sortie 28 montée à pivotement sur le deuxième levier 22 à une distance D du centre de l'axe 24. La tige de sortie 28 comporte une tête arrondie 30 qui est reçue dans une ouverture correspondante 32 dans un piston d'actionnement 34 d'un émetteur de freinage (non représenté).

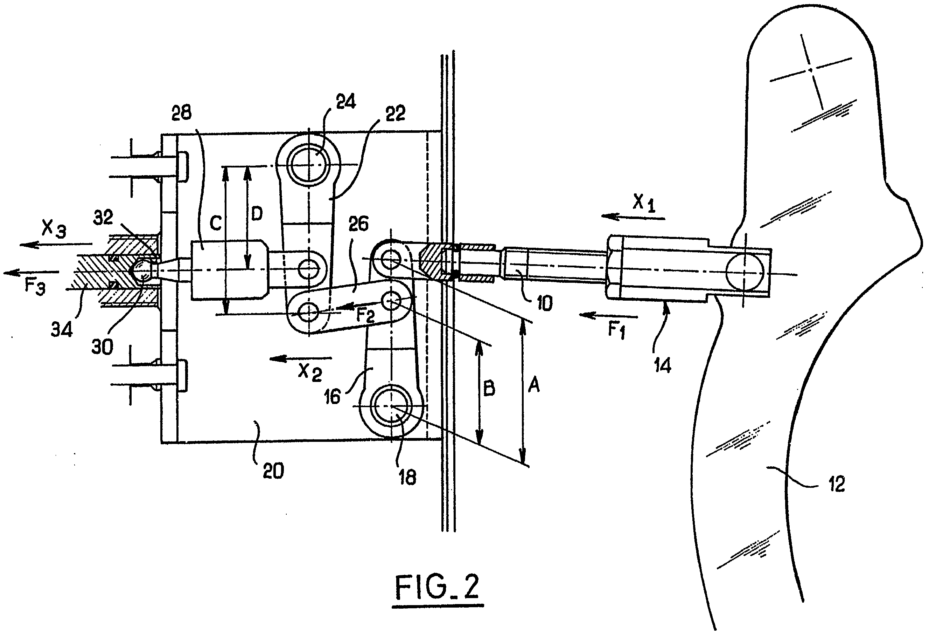

Lors d'un freinage du véhicule, la pédale 12 est déplacée et l'amplificateur d'effort adopte la position représentée sur la figure 2, entraînant le déplacement du piston d'actionnement 34.

Les courses de la tige d'entrée 10, de la biellette de liaison 26 et de la tige de sortie 28 sont représentées respectivement sur la figure 2 par les lettres $X_1$, $X_2$ et $X_3$. La relation entre $X_1$, $X_2$ et $X_3$ est la suivante :

$$X_2 = X_1 \times \frac{B}{A} \quad \text{et} \quad X_3 = X_2 \times \frac{D}{C}$$

Dans un mode de réalisation avantageux de l'invention, les dimensions A et C sont égales ainsi que les dimensions B et D. Dans ce cas

2

$$X_3 = X_1 \left(\frac{B}{A}\right)^2.$$

A titre d'exemple particulier, pour un amplificateur de freinage pneumatique pour un véhicule, les dimensions A et C sont égales à 5cm et les dimensions B et D sont égales à 3,5cm. Ainsi $X_2 =$

$$X_1 \frac{3,5}{5} = 0,7 X_1 \quad \text{et}$$

$$X_3 = X_1 \left(\frac{3,5}{5}\right)^2 = 0,49 \, X_1.$$

Dans cette example, la course de sortie est donc approximativement la moitié de la course d'entrée.

Les efforts exercés par la tige d'entrée 10, la biellette de liaison 26 et la tige de sortie 28 sont respectivement $F_1$, $F_2$, et $F_3$, avec

$$F_2 = F_1 \times \frac{A}{B} \quad \text{et} \quad F_3 = F_2 \times \frac{C}{D}$$

Dans le mode de réalisation avantageux sus-mentionné,

$$F_3 = F_1 \times \left(\frac{A}{B}\right)^2.$$

Ainsi, dans le cas de l'exemple particulier $F_2 = 1,43 \times F_1$ et $F_3 = 2,04 \times F_1$.

## Revendications

1. Amplificateur mécanique d'effort, notamment pour système de freinage d'un véhicule, comprenant un élément d'entrée (10), et un élément de sortie (28), l'élément d'entrée (10) étant relié à pivotement à un premier levier (16), et l'élément de sortie (28) étant relié à pivotement à un deuxième levier (22), les premier (16) et deuxième (22) leviers étant montés indépendamment à pivotement sur un support fixe (20) et reliés par un moyen de liaison, caractérisé en ce que le moyen de liaison est constitué par une biellette unique (26) montée à pivotement sur les premier (16) et deuxième (22) leviers, l'axe d'articulation de la biellette unique (26) sur le premier levier (16) se trouvant entre l'axe d'articulation de l'élément d'entrée (10) sur le premier levier (16) et le point de pivotement (18) du premier levier (16) par rapport au support fixe (20), tandis que l'axe d'articulation du deuxième levier (22) sur l'élément de sortie (28) se trouve entre l'axe d'articulation de la biellette unique (26) sur le deuxième levier (22) et le point de pivotement (24) du deuxième levier (22) par rapport au support fixe (20).

2. Amplificateur selon la revendication 1, caractérisé en ce que la longueur (A) du premier levier (16) entre son point de pivotement (18) par rapport au support fixe (20) et l'axe d'articulation de l'élément d'entrée (10) est égale à la longueur (C) du deuxième levier (22) entre son point de pivotement (24) par rapport au support fixe (20) et l'axe d'articulation de la biellette (26).

3. Amplificateur selon la revendication 1 ou 2, caractérisé en ce que la longueur (B) du premier levier (16) entre son point de pivotement (18) par rapport au support fixe (20) et l'axe d'articulation de la biellette (26) est égale à la longueur (D) du deuxième levier (22) entre son point de pivotement (24) par rapport au support fixe (20) et l'axe d'articulation de l'élément de sortie (28).

4. Amplificateur selon la revendication 2 ou 3, caractérisé en ce que les longueurs (A) et (C) sont d'environ 5 cm.

5. Amplificateur selon la revendication 3 ou 4, caractérisé en ce que les longueurs (B) et (D) sont d'environ 3,5 cm.

## Patentansprüche

1. Mechanischer Bremskraftverstärker, insbesondere für ein Fahrzeugbremssystem, der ein Eingangselement (10) und ein Ausgangselement (28) umfaßt, wobei das Eingangselement (10) schwenkbar mit einem ersten Hebel (16) und das Ausgangselement (28) schwenkbar mit einem zweiten Hebel (22) verbunden ist und der erste (16) und zweite (22) Hebel unabhängig voneinander schwenkbar auf einer festen Auflage (20) montiert und mit einem Verbindungsmittel miteinander verbunden sind, dadurch gekennzeichnet, daß das Verbindungsmittel aus einem einzigen Pleuel (26) besteht, der schwenkbar am ersten (16) und zweiten Hebel (2) angebracht ist, wobei sich die Schwenkachse des einzigen Pleuels (26) am ersten Hebel (16) zwischen der Schwenkachse des Eingangselements (10) am ersten Hebel (16) und dem Drehpunkt (18) des ersten Hebels (16) in Bezug auf die feste auflage (20) befindet, wohingegen sich die Schwenkachse des zweiten Hebels (22) am Ausgangselement (28) zwischen der Schwenkachse des einzigen Pleuels (26) am zweiten Hebel (22) und dem Drehpunkt (24) des zweiten Hebels (22) in Bezug auf die feste Auflage (20) befindet.

2. Verstärker nach Anspruch 1, dadurch gekennzeichnet, daß die Länge (A) des ersten Hebels (16) zwischen seinem Drehpunkt (18) in Bezug auf die feste Auflage (20) und die Schwenkachse des Eingangselements (10) der Länge (C) des zweiten Hebels (22) zwischen seinem Drehpunkt (24) in Bezug zur festen Auflage (20) und der Schwenkachse des Pleuels (26) entspricht.

3. Verstärker nach Anspruch 1 oder 2, dadurch gekennzeichnet, daß die Länge (B) des ersten Hebels (16) zwischen seinem Drehpunkt (18) in Bezug zur festen Auflage (20) und der Schwenkachse des Pleuels (26) der Länge (D) des zweiten Hebels (22) zwischen seinem Drehpunkt (24) in Bezug zur festen Auflage (20) und der Schwenkachse des Eingangselements (28) entspricht.

4. Verstärker nach Anspruch 2 oder 3, dadurch gekennzeichnet, daß die Längen (A) und (C) ungefähr 5 cm betragen.

5. Verstärker nach Anspruch 3 oder 4, dadurch gekennzeichnet, daß die Längen (B) und (D) ungefähr 3,5 cm betragen.

## Claims

1. Mechanical force amplifier, especially for the brake system of a vehicle, comprising an input element (10) and an output element (28), the input element (10) being pivotably connected to a first lever (16), and the output element (28) being pivotably connected to a second lever (22), the first lever (16) and second lever (22) being independently pivotably mounted on a stationary support (20) and being connected by a connection means, characterized in that the connection means consists of a single link (26) pivotable mounted on the first lever (16) and second lever (22), the axis of articulation of the single link (26) on the first lever (16) being located between the axis of articulation of the input element (10) on the first lever (16) and the pivoting point (18) of the first lever (16) relative to the stationary support (20), whilst the axis of articulation of the second lever (22) on the output element (28) is located between the axis of articulation of the single link (26) on the second lever (22) and the pivoting point (24) of the second lever (22) relative to the stationary support (20).

2. Amplifier according to Claim 1, characterized in that the length (A) of the first lever (16) between its pivoting point (18) relative to the stationary support (20) and the axis of articulation of the input element (10) is equal to the length (C) of the second lever (22) between its pivoting point (24) relative to the stationary support (20) and the axis of articulation of the link (26).

3. Amplifier according to Claim 1 or 2, characterized in that the length (B) of the first lever (16) between its pivoting point (18) relative to the stationary support (20) and the axis of articulation of the link (26) is equal to the length (D) of the second lever (22) between its pivoting point (24) relative to the stationary support (20) and the axis of articulation of the output element (28).

4. Amplifier according to Claim 2 or 3, characterized in that the lengths (A) and (C) are approximately 5 cm.

5. Amplifier according to Claim 3 or 4, characterized in that the lengths (B) and (D) are approximately 3.5 cm.

FIG_1

FIG_2